# EUROPÄISCHE PATENTSCHRIFT

(11) **EP 0 818 388 B1**
(45) Veröffentlichungstag und Bekanntmachung des Hinweises auf die Patenterteilung: **19.09.2001**
(21) Anmeldenummer: 97110252.0
(22) Anmeldetag: 23.06.1997
(51) Int. Cl.: B64D 13/04

(54) **System zur Regelung der Abluftmengenströme eines Flugzeuges**
System for regulating the streams of the masses of air exhausted from an aeroplane
Système pour régulation de quantité des fleuves d'air sortant d'un avion

(30) Priorität: 13.07.1996 DE 19628395
(43) Veröffentlichungstag der Anmeldung: 14.01.1998
(73) Patentinhaber: EADS Airbus GmbH, 21129 Hamburg (DE)
(72) Erfinder: Müller, Wolfgang, Ing. (grad.), 21643 Beckdorf (DE); Klein, Bernd, Dipl.-Ing., 25421 Pinneberg (DE)
(74) Vertreter: Hansmann, Dierk, Dipl.-Ing.

(56) Entgegenhaltungen:
- EP-A- 0 625 463
- US-A- 4 960 249
- US-A- 5 046 686
- US-A- 5 105 729
- US-A- 5 273 486
- US-A- 5 297 987

## Beschreibung

Die Erfindung bezieht sich auf ein System zur Regelung der Abluftmengenströme eines Flugzeuges gemäß dem Oberbegriff des Anspruchs 1.

Eine bekannte Vorgehensweise bei Regelung der Ausströmventile (outflow valves) eines Passagierflugzeuges besteht darin, daß die Ausströmventile über unidirektionale Datenbusse mit den Regeleinrichtungen (controllers) verbunden sind. Jede Regeleinrichtung übermittelt die entsprechenden Stell- und Regelgrößen über einen separaten Datenbus an das (die) längsachsenverteilt dem Flugzeugrumpf angeordnete(n) Ausströmventile, das (die) dann (druckgeregelt) einen Teil der verbrauchten Abluft aus dem (vorderen und / oder hinteren) Rumpfbereich an die äußere Umgebung nach außerhalb des Flugzeuges abführt (abführen). Entsprechende Rückinformationen über den Betriebszustand des betreffenden Ausströmventils erhalten die Regeleinrichtungen über einen jeweils weiteren separaten Datenbus zugestellt. Für die Kommunikation der Regeleinrichtungen mit dem (den) Ausströmventil(en) werden danach wenigstens vier Datenbusse zum Datentransport benötigt, wobei die gleiche Anzahl weiterer Datenbusse zur Datenrückführung erforderlich sind. Der Aspekt der Versorgungszuverlässigkeit wird bei diesem Buskonzept vernachlässigt. Daraus ergibt sich, daß jede Steuereinrichtung nur die ihr zugeordneten Ausströmventile steuern kann, wobei die wechselseitige Kommunikation der Steuereinheiten entweder fehlt oder durch wenigstens einen zusätzlichen unidirektionalen Datenbus aufzubauen wäre. Derartigen Systemarchitekturen haftet der Nachteil an, daß es nur mit hohem Aufwand oder überhaupt nicht möglich ist, die Funktionen des (auf ein erstes Ausströmventil bezogenen) einen Systems durch die Systemkomponenten des (auf ein zweites Ausströmventil bezogenen) anderen Systems im bus- oder gerätebezogenen Störungsfall ausführen zu lassen.

Demzufolge liegt der Erfindung die Aufgabe zugrunde, ein gattungsgemäßes System (zur Regelung der Abluftmengenströme eines Flugzeuges) derart zu gestalten, daß mit ihm ein variabler Informationsaustausch zwischen den Systemkomponenten (Regeleinrichtungen, Ausströmventile inclusive Ventilsteuereinheiten) und eine flexible Reaktion auf Störungen (Systemfehler) innerhalb derer selbst und den mit ihnen verbundenen Datenbusverbindungen erfolgt. Die Busarchitektur ist derart zu vereinfachen, daß mit ihr ein fortwährend gesicherter Datenaustausch zwischen den Systemkomponenten bei gleichzeitiger Verbesserung der Systemverfügbarkeit erreicht wird. Die Systemverbesserung ist auf eine angemessene Gewichtsreduzierung der Busarchitektur abzustellen.

Diese Aufgabe wird durch die im Anspruch 1 angegebenen Maßnahmen gelöst. In den weiteren Unteransprüchen sind zweckmäßige Ausgestaltungen dieser Maßnahmen angegeben.

Die Erfindung ist in einem Ausführungsbeispiel anhand der Zeichnungen näher beschrieben. Es zeigen
- Fig.1: das System zur Regelung der Abluftmengenströme eines Ausströmventiles im Blockschaltbild;
- Fig.2: das System nach der Fig.1 mit Darstellung der Busarchitektur;
- Fig.3: das System zur Regelung der Abluftmengenströme zweier Ausströmventile im Blockschaltbild.

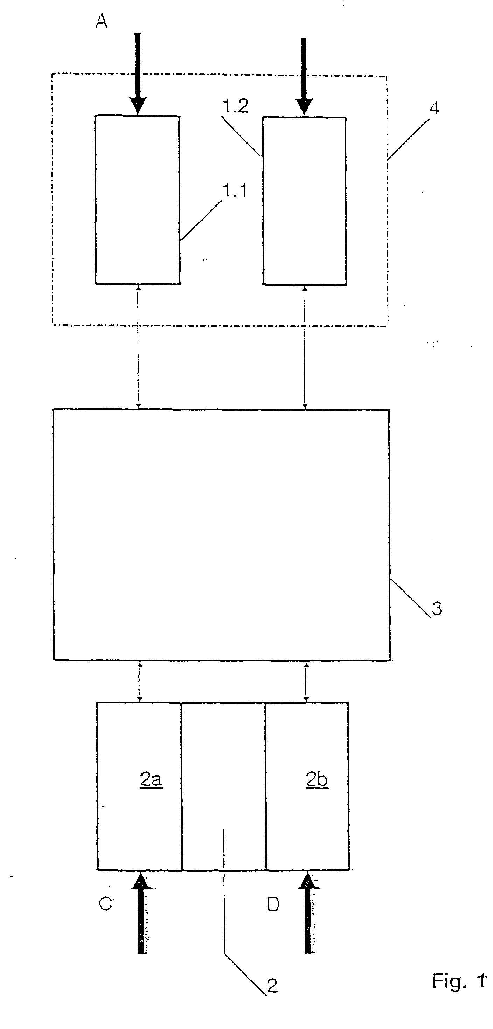

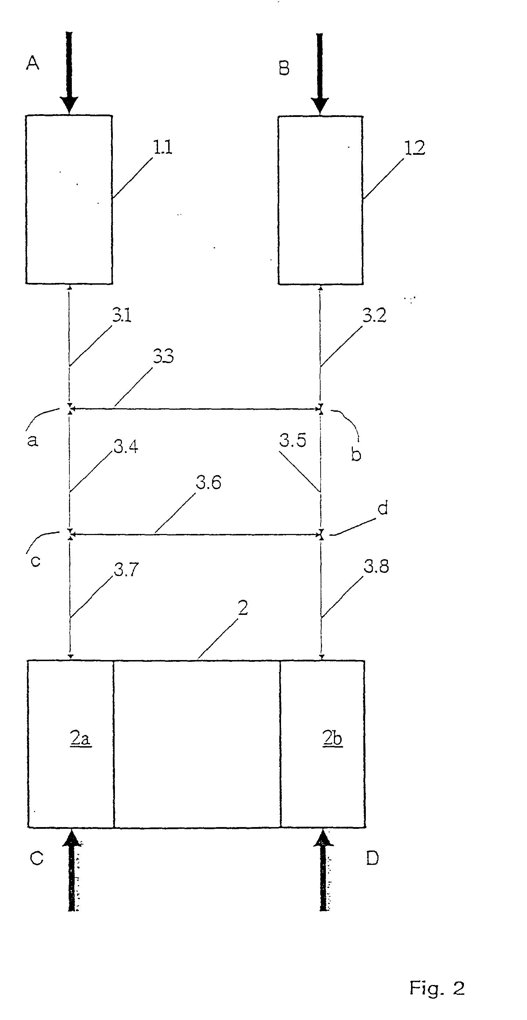

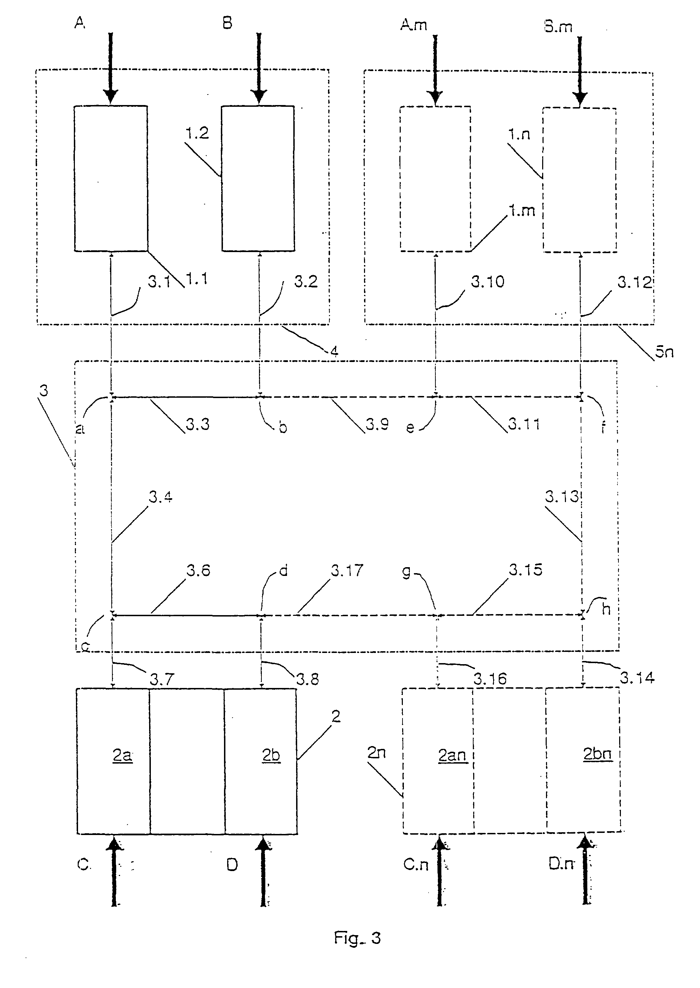

In der Fig.1 ist das System zur Regelung der Abluftmengenströme eines Flugzeuges für ein Ausströmventil im Blockschaltbild dargestellt, das in der Fig.2 mit Darstellung der Datenbusarchitektur gezeigt wird.. Die Fig.3 zeigt das System zur Regelung der Abluftmengenströme zweier Ausströmventile im Blockschaltbild.

Nach der Fig.1 besteht das Regelsystem aus zwei Regeleinrichtungen (controllers) 1.1, 1.2, die zu einer Regeleinheit 4 zusammengefaßt sind, und zwei Ventilsteuereinheiten 2a, 2b. Die Regeleinrichtungen 1.1, 1.2 und die Ventilsteuereinheiten 2a, 2b sind örtlich entfernt zueinander mit einer Kontrollschleife 3 verbunden. Die beiden Ventilsteuereinheiten 2a, 2b sind getrennt zueinander in je einer Ventil-Actuator-Box, die einem Ausströmventil 2 (outflow valve) zugeordnet ist, angeordnet. Sie steuern den Ventilmechanismus des Ausströmventiles 2.
Die elektrische Ansteuerung der Regeleinrichtungen 1.1, 1.2 und der Ventilsteuereinheiten 2a, 2b erfolgt separat über deren Einspeisungen A, B bzw. C, D. Es ist ebenso denkbar, daß die Stromversorgung der Ventilsteuereinheiten 2a, 2b durch die Regeleinrichtungen 1.1, 1.2 geführt wird, wonach dann die Einspeisungen A, B, C, D durch Schleifung der (nicht gezeigten) Stromversorgungsleitung verbunden sind.
Die Kontrollschleife 3 stellt eine geschlossene Ringleitung dar, die in praxi zur Übertragung von Informationen mittels Datenaustausch (Datentransfer) zwischen der ihr angeschlossenen Systemkomponenten (Regeleinrichtungen 1.1, 1.2 und Ventilsteuereinheiten 2a, 2b des Ausströmventils 2) dient. Sie läßt sich durch Signalübertragungsleitungen (elektrische oder optische Leiter) aufbauen, wobei mehrere (in Fig.2 gezeigte) funktionelle Schnittstellen a, b, c, d innerhalb der Kontrollschleife 3 liegen.

Alle Verbindungen des Regelsystems (Verbindungen der Systemkomponenten zur Kontrollschleife 3 und Kontrollschleifen-Verbindungen) sind als Datenbus ausgebildet, wobei die Verbindungen bevorzugt mit Lichtwellenleitern ausgeführt sind.

Das System zur Regelung des Ausströmventiles 2 nach Fig.1 ist derart aufgebaut, wonach eine erste und eine zwei Regeleinrichtung 1.1, 1.2 in der Nähe der Regeleinrichtungen 1.1, 1.2 direkt an die Kontrollschleife 3 geschalten sind. Weiterhin sind einem erstes Ausströmventil 2 zwei Ventilsteuereinheiten 2a, 2b zugeordnet, die in der Nähe des Ausströmventils 2 mit der Kontrollschleife 3 direkt verbunden sind. Danach kann jede Regeleinrichtung 1.1, 1.2 über die Kontrollschleife 3 mit jeder Ventilsteuereinheit 2a, 2b einzeln kommunizieren.

Infolge der Datenbusarchitektur der Kontrollschleife 3 wird zwischen den beiden Regeleinrichtungen 1.1, 1.2 ein permanenter Informationsaustausch stattfinden. Gleichzeitig wird jede Regeleinrichtung 1.1, 1.2 in die Lage versetzt, über den SignalübertragungsLeitungsweg aktuelle Informationen bezüglich des Systemzustandes der Kontrollscheife 3 und / oder des Ausströmventils 2 inclusive der letzterem zugeordneten Ventilsteuereinheiten 2a, 2b abzufragen. Dabei sind die Regeleinrichtungen 1.1, 1.2 über einen oder mehrere bidirektionale Datenbusse (wenigstens einem Sende- und Returnbus) mit den Ventilsteuereinheiten 2a, 2b verbunden.

Die Arbeitsweise des Regelsystems wird maßgeblich durch eine in den Regeleinrichtungen 1.1, 1.2 integrierte Auswertelogik bestimmt, die durch Programmierung entsprechende Daten des Flugzeuges (beispielsweise denen des aktuell herrschenden Kabinendruckes) berücksichtigt und danach über die Ventilsteuereinheiten 2a, 2b die Ventilmechanik des Ausströmventils 2 betätigt.

Nach der Fig.2 wird das Regelsystems nach der Fig.1 blockschaltbildlich durch die genauere Darstellung der Busarchitektur der Kontrollschleife 3 ergänzt. Danach besteht diese Kontrollschleife 3 (vereinfacht dargestellt) aus vier miteinander verbundenen Signalübertragungsleitungen 3.3, 3.4, 3.5, 3.6, die beispielgemäß als Lichtwellenleiter ausführt sind. Die Signalübertragungsleitungen 3.3, 3.4, 3.5, 3.6 sind an ihren Leitungsenden mit einer der vier funktionellen Schnittstellen a bis d verbunden, so daß Ihre Verschaltung zueinander eine (zusammengeführte) Ringleitung ergibt. Jede Schnittstelle a bis d stellt funktionell eine Weiche zur Umlenkung und Weiterleitung der Zu- oder Rückinformationen an die jeweiligen Systemkomponenten dar.

Bei der Arbeitsweise des Systems zur Regelung der Abluftmengenströme des ersten Ausströmventiles 2 unterscheidet man nach zwei Situationen.

Im Normalfall - kommuniziert die erste Regeleinrichtung 1.1 mit der ersten Ventilsteuereinheit 2a und die zweite Regeleinrichtung 1.2 mit der zweiten Ventilsteuereinheit 2b, wobei die adressierten Stell- und Regelgrößen der beiden Regeleinrichtungen 1.1, 1.2 die betreffende Ventilsteuereinheit 2a oder 2b über den kürzesten Signalübertragungsleitungsweg der Kontrollschleife 3 (Verbindung 3.1, Schnittstelle a, Verbindung 3.4, Schnittstelle c, Verbindung 3.7 bzw. Verbindung 3.2, Schnittstelle b, Verbindung 3.5, Schnittstelle d, Verbindung 3.8) erreichen. Die Rückinformationen werden den gleichen Signalübertragungsleitungsweg passieren.

Im Störungsfall, - bei dem die erste oder zweite Ventilsteuereinheit 2a, 2b gestört ist und / oder auf den (im vorbeschriebenen Normalfall benutzten) Signalübertragungsleitungswegen der Kontrollschleife 3 ein Leitungsabschnitt gestört ist -, wird, infolge des permanenten Datenaustausches zwischen den beiden Regeleinrichtungen 1.1, 1.2, der über den nahezu direkten Signalübertragungsleitungsweg der Kontrollschleife 3 (Verbindung 3.1, Schnittstelle a, Verbindung 3.3, Schnittstelle b, Verbindung 3.2) stattfindet, die im aktiven Zustand befindliche Regeleinrichtung 1.1 oder 1.2 über den nicht gestörten Leitungsabschnitt der Kontrollschleife 3 die Ansteuerung der nicht gestörten ersten und / oder zweiten Ventilsteuereinheit 2a oder 2b des ersten Ausströmventiles 2 realisieren.

Danach kann beispielsweise die erste Regeleinrichtung 1.1 sowohl die erste Ventilsteuereinheit 2a wie auch die zweite Ventilsteuereinheit 2b über die Kontrollschleife 3 steuern. Die zweite Regeleinrichtung 1.2 empfängt dabei permanent alle Daten, die die erste Regeleinrichtung 1.1 zur Steuerung des ersten Ausströmventiles 2 an die betreffende Ventilsteuereinheit 2a oder 2b ausgibt.

Außerdem empfängt die erste Regeleinrichtung 1.1 wie auch die zweite Regeleinrichtung 1.2 den jeweiligen Fehlerstatus des ersten Ausströmventiles 2 bzw. der betroffenen Ventilsteuereinheiten 2a, 2b, weil beide Regeleinrichtungen 1.1, 1.2 ihren aktuellen Betriebszustand auf die Kontrollschleife 3 (Busarchitektur) senden.

Durch die vorerwähnte Auswertelogik innerhalb der Regeleinrichtungen 1.1, 1.2 wird festgestellt, in welcher Kombination die einzelne Regeleinrichtung 1.1, 1.2 mit der (den) betreffenden Ventilsteuereinheit(en) 2a, 2b die Systemregelung des Abluftmengenstromes des Ausströmventiles 2 bei niedrigster Anzahl der zu realisierenden Funktionen und ggf. zu umgehenden Störungen realisieren kann. Dadurch wird gewährleistet, daß (im ungünstigsten Fall) trotz auftretender Störungen (Fehler) innerhalb der Ventilmechanik des Ausströmventiles 2 incl. der Ventilsteuereinheiten 2a, 2b und / oder einer der beiden Regeleinrichtungen 1.1, 1.2 dauernd eine fehlerfreie Kombination der verschalteten Elemente der Systemregelung oder auch störungsfreie Signalübertragungsleitungswege der Kontrollschleife 3 zusammengeschaltet sind.

Nach der Fig.3 wird - gegenüber dem vorbeschriebenen System nach den Figuren 1 und 2 - ein weiteres System zur Regelung der Abluftmengenströme eines Flugzeuges für zwei Ausströmventile 2, 2n im Blockschaltbild gezeigt.

Danach wird das (nach der Fig.2) vorbeschriebene Regelsystem derart erweitert, indem man eine (zweite) weitere Regeleinheit 5n, die aus wenigstes einer dritten Regeleinrichtung 1.m besteht und beispielgemäß (nach dem Vorbild der Regeleinheit 4) durch eine vierte Regeleinrichtung 1.n ergänzt wird, welche gemeinsam die Ventilmechanik eines zweiten Ausströmventiles 2n steuern, an die Kontrollschleife 3, deren Signalübertragungsleitungsweg entsprechend ausgebaut wird, schaltet. Der Aufbau der (zweiten) weiteren Regeleinheit 5n mit zwei Regeleinrichtungen 1.m, 1.n trägt zur Erweiterung der Systemverfügbarkeit und zur Erhöhung der Versorgungszuverlässigkeit des (so erweiterten) Regelsystems bei.

Die Kontrollschleife 3 wird (gegenüber dem Regelsystem nach der Fig.2) mit weiteren in Reihe geschalteten Verbindungen 3.9, 3.11, 3.13, 3.15, 3.17 (Signalübertragungsleitungen) erweitert. Dabei sind die beiden freien Enden der Reihenschaltung (der Verbindungen 3.9 und 3.17) mit der funktionellen Schnittstelle b und d einzeln verbunden. Die Verbindung 3.5 wird (gegenüber dem Regelsystem nach der Fig.2) aus der Kontrollschleife 3 entfernt. Zwischen den Verbindungen 3.9, 3.11, 3.13, 3.15, 3.17 liegt jeweils eine funktionelle Schnittstelle e, f, g, h, mit denen die (Signalübertragungsleitungs-) Verbindungen (in vorgenannter Reihenfolge) verbunden sind. Die Schnittstellen e bis h stellen funktionell eine Weiche zur Umlenkung und Weiterleitung der Zuoder Rückinformationen an die jeweiligen Systemkomponenten dar.
Weiterhin ist die dritte Regeleinrichtung 1 .m über die Verbindung 3.10 mit der Schnittstelle e, die vierte Regeleinrichtung 1 .n über die Verbindung 3.12 mit der Schnittstelle f verbunden. An die Schnittstellen g und h der vorbeschriebenen erweiterten Kontrollschleife 3 sind weiterhin die zwei Ventilsteuereinheiten 2an, 2bn geschalten, die den Ventilmechanismus des zweiten Ausströmventiles 2n (outflow valve) steuern. Die beiden Ventilsteuereinheiten 2an, 2bn befinden sich getrennt zueinander in je einer Ventil-Actuator-Box, die dem zweiten Ausströmventil 2n zugeordnet ist.

Die elektrische Ansteuerung der Regeleinrichtungen 1.m, 1.n und der Ventilsteuereinheiten 2an, 2bn erfolgt separat über die Einspeisungen A.m, B.m bzw. C.n, D.n der genannten Elemente. Die Führung der Stromversorgung der Ventilsteuereinheiten 2an, 2bn durch die Regeleinrichtungen 1.m, 1.n wäre auch möglich.
Ebenso ist eine Einschleifung der Stromversorgung der Regeleinrichtungen 1.m, 1.n und der Ventilsteuereinheiten 2an, 2bn des erweiterten Regelsystems an die (nicht gezeigte) Stromversorgungsleitung, welche die Einspeisungen A, B, C, D verbindet, denkbar.

Auch die Verbindungen des erweiterten Regelsystems (Verbindungen der Systemkomponenten zur Kontrollschleife 3 und Kontrollschleifen-Verbindungen) sind sämtlich als Datenbus ausgebildet, wobei alle diese Verbindungen bevorzugt mit Lichtwellenleitern ausgeführt sind.

Ergänzend den Ausführungen nach der Fig.2 wird es - infolge der Datenbusarchitektur - möglich sein, daß die dritte und / oder vierte Regeleinrichtung 1.m, 1.n über die erweiterte Kontrollschleife 3 mit der dritten und / oder vierten Ventilsteuereinheit 2an, 2bn - aber auch mit der ersten und / oder zweiten Ventilsteuereinheit 2a, 2b - einzeln kommuniziert.

Der permanente Informationsaustausch zwischen der dritten und vierten Regeleinrichtung 1.m, 1.n - aber auch mit der ersten und / oder zweiten Regeleinrichtung 1.1, 1.2 - wird ebenfalls über die erweiterte Kontrollschleife 3 stattfinden.

Das gleichzeitige Abfragen aktueller Informationen (Daten) durch jede der Regeleinrichtungen 1.1, 1.2, 1.m, 1.n bezüglich des Systemzustandes der erweiterten Kontrollschleife 3 und / oder der beiden Ausströmventile 2, 2n inclusive der diesen zugeordneten Ventilsteuereinheiten 2a, 2b, 2an, 2bn wird in gleicher Weise stattfinden. Dabei sind die genannten Regeleinrichtungen 1.1, 1.2, 1.m, 1.n über einen oder mehrere bidirektionale Datenbusse (wenigstens einem Sende- und Returnbus) mit den genannten Ventilsteuereinheiten 2a, 2b, 2an, 2bn verbunden.

Dabei wird die in den beiden Regeleinrichtungen 1.m, 1.n integrierte Auswertelogik durch entsprechende Programmierung (nach dem Vorbild der Regeleinrichtungen 1.1, 1.2) über die Ventilsteuereinheiten 2an, 2bn die Ventilmechanik des zweiten Ausströmventils 2n oder (im Störungsfall) über die Ventilsteuereinheiten 2a, 2b die Ventilmechanik des ersten Ausströmventils 2 betätigen.

Im Normalfall - kommuniziert die dritte Regeleinrichtung 1.m mit der dritten Ventilsteuereinheit 2an und die vierte Regeleinrichtung 1.n mit der vierten Ventilsteuereinheit 2bn, wobei die adressierten Stell- und Regelgrößen der beiden Regeleinrichtungen 1.m, 1.n die betreffende Ventilsteuereinheit 2an oder 2bn über den kürzesten Signalübertragungsleitungsweg der erweiterten Kontrollschleife 3 (Verbindung 3.10, Schnittstelle e, Verbindung 3.11, Schnittstelle f, Verbindung 3.13, Schnittstelle h, Verbindung 3.15, Schnittstelle g, Verbindung 3.16 bzw. Verbindung 3.12, Schnittstelle f, Verbindung 3.13, Schnittstelle h, Verbindung 3.14) erreichen. Die Rückinformationen werden den gleichen Signalübertragungsleitungsweg passieren.

Im Störungsfall, - bei dem die dritte oder vierte Ventilsteuereinheit 2an, 2bn gestört ist und / oder auf den (im vorbeschriebenen Normalfall benutzten) Signalübertragungsleitungswegen der erweiterten Kontrollschleife 3 ein Leitungsabschnitt gestört ist -, wird, infolge des permanenten Datenaustausches zwischen den beiden Regeleinrichtungen 1.m, 1.n, der über den nahezu direkten Signalübertragungsleitungsweg der erweiterten Kontrollschleife 3 (Verbindung 3.10, Schnittstelle e, Verbindung 3.11, Schnittstelle f, Verbindung 3.12) stattfindet, die im aktiven Zustand befindliche Regeleinrichtung 1.m oder 1.n über den nicht gestörten Leitungsabschnitt der erweiterten Kontrollschleife 3 die Ansteuerung der nicht gestörten dritten und / oder vierten Ventilsteuereinheit 2an oder 2bn des zweiten Ausströmventiles 2n realisieren.

Danach kann beispielsweise die dritte Regeleinrichtung 1.m sowohl die dritte Ventilsteuereinheit 2an wie auch die vierte Ventilsteuereinheit 2bn über die erweiterte Kontrollschleife 3 steuern. Die vierte Regeleinrichtung 1.n empfängt dabei permanent alle Daten, die die dritte Regeleinrichtung 1.m zur Steuerung des zweiten Ausströmventiles 2n an die betreffende Ventilsteuereinheit 2an oder 2bn ausgibt.

Außerdem empfängt die dritte Regeleinrichtung 1.m wie auch die vierte Regeleinrichtung 1.n den jeweiligen Fehlerstatus des zweiten Ausströmventiles 2n bzw. der betroffenen Ventilsteuereinheiten 2an, 2bn, weil beide Regeleinrichtungen 1.m, 1.n ihren aktuellen Betriebszustand auf die erweiterte Kontrollschleife 3 (Busarchitektur) senden.

Ohne die vorgenannte Ausführungsform nach der Fig.3 weiter zu komplizieren wird ergänzt, daß sich der Aufbau der erweiterten Kontrollschleife 3 derart vermaschen läßt, wonach die Verbindung 3.5 (nach dem Vorbild der Fig.2) weiterhin mit dem beiden Schnittstellen b und d verbunden bleibt und zwischen den Schnittstellen e und g eine zusätzliche (nicht dargestellte) Verbindung gebrückt wird. Dadurch lassen sich einerseits die Datenübertragungswege zwischen der zweiten Regeleinrichtung 1.2 und der zweiten Ventilsteuereinheit 2b sowie der dritten Regeleinrichtung 1.m und der dritten Ventilsteuereinheit 2an verkürzen. Mit einer derartig vermaschten erweiterten Kontrollschleife 3 würde andererseits die Versorgungszuverlässigkeit des Regelsystems und die Systemverfügbarkeit der einzelnen Schaltelemente eine weitere Steigerung erfahren, wodurch im angenommenen Störungsfall einzelner Elemente oder einzelner Signalübertragungsleitungswege ein Ausfall des Gesamtsystems zur Regelung der Abluftmengenströme zweier Ausströmventile 2, 2n immer unwahrscheinlicher wird.

Das Regelsystem nach der Fig.3 läßt sich in vielfacher Hinsicht mit weiteren Regeleinheiten bzw. Regeleinrichtungen erweitern, da zwei zu einer Regeleinheit 4 integrierte Regeleinrichtungen 1.1, 1.2 (nach dem Vorbild der Fig.2) einem für mehrere Ausströmventile konzipierten Regelungssystem keine ausreichende Ausfallwahrscheinlichkeit gewähren, die für ein Flugzeug unbedingt benötigt wird. Um die notwendige (mehrfach angesprochene) Versorgungszuverlässigkeit und Systemverfügbarkeit des Regelsystems der Abluftmengenströme eines Flugzeuges entsprechend abzusichern, wäre die Installation mehrerer Regeleinrichtungen notwendig, die über die erweiterte und ggf. vermaschte Kontrollschleife 3 die entsprechenden Ventilsteuereinheiten zur Betätigung der Ventilmechanik mehrerer Ausströmventile steuert. Deshalb wählt die bildlichen Darstellung nach der Fig.3 (andeutungsweise) für weitere (mit der erweiterten Kontrollschleife 3) verknüpften Schaltelemente den Index n.
Mit den vorgestellten Ausführungsformen wird erreicht, daß eine flexiblere Reaktion auf Fehler innerhalb der beispielgemäß vorgestellten Regelsysteme möglich wird.

## Patentansprüche

1. System zur Regelung der Abluftmengenströme eines Flugzeuges, bestehend aus mehreren stromversorgten Regeleinrichtungen (1.1, 1.2; 1m, 1n), die über eine gemeinsam genutzte Kontrollschleife (3) zur Übermittlung entsprechender Informationen mit wenigstens einem im Flugzeug-Rumpfbereich installierbaren Ausströmventile (2, 2n) verbunden sind,
**dadurch gekennzeichnet, daß**
- die Regeleinrichtungen (1.1, 1.2; 1m, 1n) paarweise jeweils eine Regeleinheit (4, 5n) bilden, die funktionell mit der Kontrollschleife (3) verbunden sind,
- die Kontrollschleife (3) sich aus einer geschlossenen Ringleitung zusammensetzt, die sich aus mehreren Signalübertragungsleitungen aufbaut, welche funktionell miteinander verbunden sind,
- wenigstens eine erste und eine zweite Regeleinrichtung (1.1, 1.2) einer ersten Regeleinheit (4) mit der Kontrollschleife (3) verbunden ist, wobei über letztere zwischen den beiden Regeleinrichtungen (1.1; 1.2) ein permanenter Informationsaustausch erfolgt,
- die Verbindung weiterer Regeleinrichtungen (1.m, 1.n), die jeweils paarweise zu einer weiteren Regeleinheit (5n) integriert sind, mit der Kontrollschleife (3) vorgesehen ist, wobei zwischen den beiden Regeleinrichtungen (1.m, 1.n) der betreffenden weiteren Regeleinheit (5n) und zwischen allen mit der Kontrollschleife (3) verbundenen Regeleinrichtungen (1.1, 1.2, 1.m; 1.n) über die Kontrollschleife (3) ein permanenter Informationsaustausch stattfindet,
- jedes Ausströmventil (2, 2n) wenigstens zwei Ventilsteuereinheiten (2a, 2b; 2an, 2bn) aufweist, die mit der Kontrollschleife (3) verbunden sind, wobei die Ansteuerung der beiden Ventilsteuereinheiten (2a, 2b; 2an, 2bn) durch die im aktivierten Zustand befindliche Regeleinrichtung (1.1, 1.2; 1.m, 1.n) der betreffenden Regeleinheit (4, 5n) geschieht
- alle Verbindungen der Signalübertragungsleitungen des Systems als Datenbus ausgebildet sind.

2. System nach Anspruch 1, **dadurch gekennzeichnet, daß** an die Kontrollschleife (3) ein erstes Ausströmventil (2) und wenigstens ein weiteres Ausströmventil (2n) angeschlossen ist, so daß sich jedes Ausströmventil (2, 2n) separat über die Kontrollschleife (3) durch jede Regeleinheit (4, 5n) ansteuern läßt, wobei im Normalfall die erste Regeleinheit (4) mit dem ersten Ausströmventil (2) und die betreffende weitere Regeleinheit (5n) mit dem betreffenden weiteren Ausströmventil (2n) kommuniziert und im Störungsfall - infolge des permanenten Datenaustausches zwischen den Regeleinheiten (4, 5n) - die im aktiven Zustand befindliche Regeleinheit (4, 5n) über den nicht gestörten Signalübertragungsleitungsbereich der Kontrollschleife (3) die Ansteuerung des nicht gestörten ersten oder weiteren Ausströmventiles (2, 2n) realisiert.

3. System nach Anspruch 1, **dadurch gekennzeichnet, daß** die Kontrollschleife (3) mehrere funktionelle Schnittstellen (a, b, c, d, e, f, g, h) aufweist, mit denen die Regeleinrichtungen (1.1, 1.2; 1.m, 1.n) und die Ventilsteuereinheiten (2a, 2b; 2an, 2bn) verbunden sind.

4. System nach Anspruch 1, **dadurch gekennzeichnet, daß** alle Verbindungen der Signalübertragungsleitungen mit Lichtwellenleitern oder isolierten elektrischen Leitern ausgeführt sind.

5. System nach Anspruch 1, **dadurch gekennzeichnet, daß** die Regeleinrichtungen (1.1, 1.2; 1m, 1n) über einen oder mehrere bidirektionale Datenbusse mit den Ventilsteuereinheiten (2a, 2b; 2an, 2bn) verbunden sind.

6. System nach Anspruch 1, **dadurch gekennzeichnet, daß** jede einzelne Regeleinrichtung (1.1, 1.2; 1m, 1n) eine Auswertelogik zur Systemüberwachung aufweist und mit jeder einzelnen Ventilsteuereinheit (2a, 2b; 2an, 2bn) über den Datenbus verbunden ist, wobei die Regeleinrichtungen (1.1, 1.2; 1m, 1n) Störsituationen des Bussystems und / oder der Ausströmventile (2, 2n) einschließlich der Ventilsteuereinheiten (2a, 2b; 2an, 2bn) erfassen und auswerten und wegen ihres untereinander permanent stattfindenden Datenaustausches mittels der Auswertelogik den ungestörten Betrieb des betreffenden Ausströmventiles (2, 2n) durch die jeweils im aktiven Zustand befindliche Regeleinrichtung (1.1, 1.2; 1m, 1n) der ersten oder weiteren Regeleinheit (4, 5n) realisieren.

7. System nach Anspruch 1, **dadurch gekennzeichnet, daß** die Kontrollschleife (3) aus wenigstens einer Masche besteht, wobei zwei auf ihr liegenden funktionelle Schnittstellen (a, b, c, d, e, f, g, h) wenigstens durch einen Signalübertragungsleitungszweig verbunden sind.

## Claims

1. System for regulating the volume of air exhausted by an aircraft, consisting of several powered controllers (1.1, 1.2; 1m, 1n), that, for the transmission of relevant data, are connected via a shared watchdog circuit (3) to at least one outflow valve (2, 2n) that can be installed in the fuselage of the aircraft,
**characterised in that**
- pairs of controllers (1.1, 1.2; 1m, 1n) that are functionally connected to the watchdog circuit (3), form one control unit (4, 5n),
- the watchdog circuit (3) is comprised of a closed ring circuit that is formed from several functionally interconnected signal transmission lines,
- at least one first and one second controller (1.1, 1.2) of a first control unit (4) is connected to the watchdog circuit (3), wherein a permanent data transfer takes place between the two controllers (1.1; 1.2) via said watchdog circuit,
- provision is made for the connection of further controllers (1.m, 1.n) to the watchdog circuit (3), pairs of which controllers are integrated into a further control unit (5n), wherein a permanent data transfer takes place via the watchdog circuit (3) between the two controllers (1.m, 1.n) of the relevant further control unit (5n) and between all controllers (1.1, 1.2, 1.m; 1.n) connected to the watchdog circuit (3),
- each outflow valve (2, 2n) has at least two valve control units (2a, 2b; 2an, 2bn), that are connected to the watchdog circuit (3), wherein the control for the two valve control units (2a, 2b; 2an, 2bn) is effected by the active-state controller (1.1, 1.2; 1.m, 1.n) of the relevant control unit (4, 5n),
- all connections of the signal transmission lines of the system are constructed as a data bus.

2. System according to Claim 1,
**characterised in that**
a first outflow valve (2) and at least one further outflow valve (2n) is connected to the watchdog circuit (3), so that each outflow valve (2, 2n) can be separately controlled by each control unit (4, 5n) via the watchdog circuit (3), wherein in normal operation the first control unit (4) communicates with the first outflow valve (2) and the relevant further control unit (5n) communicates with the relevant further outflow valve (2n) and in the event of a fault - due to the permanent data transfer between the control units (4, 5n) - the active-state control unit (4, 5n) provides the control for the non-faulty first or further outflow valve (2, 2n) via the non-faulty signal, transmission line area of the watchdog circuit (3).

3. System according to Claim 1,
**characterised in that**
the watchdog circuit (3) has several functional interfaces (a, b, c, d, e, f, g, h), to which the controllers (1.1, 1.2; 1.m, 1.n) and the valve control units (2a, 2b; 2an, 2bn) are connected.

4. System according to Claim 1,
**characterised in that**
all connections of the signal transmission lines are made by means of fibre-optic cables or insulated electrical conductors.

5. System according to Claim 1,
**characterised in that**
the controllers (1.1, 1.2; 1m, 1n) are connected to the valve control units (2a, 2b; 2an, 2bn) via one or more bidirectional data buses.

6. System according to Claim 1,
**characterised in that**
each individual controller (1.1, 1.2; 1m, 1n) has a logic evaluation circuit for system monitoring and is connected via the data bus to each individual valve control unit (2a, 2b; 2an, 2bn), wherein, by means of the logic evaluation circuit, the controllers (1.1, 1.2; 1m, 1n) detect and evaluate fault situations in the bus system and/or in the outflow valves (2, 2n), including the valve control units (2a, 2b; 2an, 2bn), and because of their data transfer that is permanently established between them, they provide undisturbed operation of the relevant outflow valve (2, 2n) by the respective active-state controller (1.1, 1.2; 1m, 1n) of the first or further control unit (4, 5n).

7. System according to Claim 1,
**characterised in that**
the watchdog circuit (3) consists of at least one mesh, wherein two functional interfaces (a, b, c, d, e, f, g, h) connected to this mesh are connected by means of at least one signal transmission line branch.

## Revendications

1. Système pour régulation de quantité des fleuves d'air sortant d'un avion, composé de plusieurs dispositifs de réglage à alimentation électrique (1.1, 1.2 ; 1m, 1n) reliés à au moins une soupape d'évacuation (2, 2n) pouvant être placée dans le fuselage de l'avion, par l'intermédiaire d'une boucle de contrôle (3) utilisée conjointement et destinée à transmettre les informations appropriées,
**caractérisé en ce que**
- les dispositifs de réglage (1.1, 1.2 ; 1m, 1n) sont groupés par deux, chaque paire formant une unité de réglage, et sont reliés de façon fonctionnelle à la boucle de contrôle (3),
- la boucle de contrôle (3) est composée d'une ligne en boucle fermée elle même constituée de plusieurs lignes de transmission de signaux reliées les unes aux autres de façon fonctionnelle,
- au moins deux dispositifs de réglage (1.1, 1.2) d'une première unité de réglage (4) sont reliés à la boucle de contrôle (3) via laquelle des informations sont échangées en permanence entre les deux dispositifs de réglage (1.1 ; 1.2),
- d'autres dispositifs de réglage (1.m, 1.n) groupés par paires pour former une unité de réglage supplémentaire (5n) sont reliés à la boucle de contrôle (3), des informations étant échangées en permanence entre les deux dispositifs de réglage (1.m, 1.n) de l'unité de réglage supplémentaire (5n) et tous les dispositifs de réglage (1.1, 1.2, 1.m ; 1.n) reliés à la boucle de contrôle (3) par l'intermédiaire de la boucle de contrôle 3),
- chaque soupape d'évacuation (2, 2n) présente au moins deux unités de commande de la soupape (2a, 2b ; 2an, 2bn) reliées à la boucle de contrôle (3) et commandées par le dispositif de réglage (1.1, 1.2 : 1.m, 1.n) activé de l'unité de réglage concernée (4, 5n),
- toutes les liaisons des lignes de transmission de signaux du système se présentent sous la forme d'un bus de données.

2. Système selon la revendication 1, **caractérisé en ce que** une première (2) et au moins une deuxième (2n) soupapes d'évacuation sont reliées à la boucle de contrôle (3), de telle sorte que chaque soupape (2, 2n) puisse être commandée séparément par une des unités de réglage (4, 5n), via la boucle de contrôle (3), la première unité de réglage (4) communiquant normalement avec la première soupape d'évacuation (2) et la seconde unité de réglage (5n) avec l'autre soupape d'évacuation (2n) tandis qu'en cas de perturbation - à cause de l'échange permanent de données entre les unités de réglage (4, 5n) - l'unité de réglage active (4, 5n) commande la première ou la deuxième soupape d'évacuation non perturbée via les lignes de transmission de signaux non perturbées de la boucle de contrôle (3).

3. Système selon la revendication 1, **caractérisé en ce que** la boucle de contrôle (3) comporte plusieurs interfaces (a, b, c, d, e, f, g, h) reliées aux dispositifs de réglage (1.1, 1.2 ; 1.m, 1.n) et aux unités de commande des soupapes (2a, 2b : 2an, 2bn).

4. Système selon la revendication 1, **caractérisé en ce que** toutes les liaisons des lignes de transmission de signaux avec des fibres optiques ou conducteurs électriques isolés ont été établies.

5. Système selon la revendication 1, **caractérisé en ce que** les unités de réglage (1.1, 1.2 ; 1m, 1n) sont reliées aux unités de commande des soupapes (2a, 2b ; 2an, 2bn) via un ou plusieurs bus de données bidirectionnels.

6. Système selon la revendication 1, **caractérisé en ce que** chaque dispositif de réglage (1.1, 1.2 ; 1m, 1n) dispose d'une logique d'évaluation destinée à contrôler le système et est relié à une unité de commande des soupapes (2a, 2b ; 2an, 2bn) via le bus de données, les unités de réglage (1.1, 1.2 ; 1m, 1n) détectant et évaluant les perturbations du système de bus et / ou des soupapes d'évacuation (2, 2n), unités de commande des soupapes (2a, 2b ; 2an, 2bn) comprises, et permettant, grâce à un échange permanent d'informations reposant sur la logique d'évaluation, un fonctionnement parfait de la soupape d'évacuation (2, 2n) concernée, via le dispositif de réglage (1.1, 1.2 ; 1m, 1n) actif de la première ou de la deuxième unité de réglage (4, 5n).

7. Système selon la revendication 1, **caractérisé en ce que** la boucle de contrôle (3) se compose d'au moins une maille sur laquelle reposent deux interfaces (a, b, c, d, e, f, g, h) fonctionnelles reliées au moins par une branche de transmission de signaux.
